(19) Europäisches Patentamt
European Patent Office
Office européen des brevets

(11) **EP 0 619 793 B1**

(12) **FASCICULE DE BREVET EUROPEEN**

(45) Date de publication et mention
de la délivrance du brevet:
**02.05.1997 Bulletin 1997/18**

(21) Numéro de dépôt: **94900189.5**

(22) Date de dépôt: **12.11.1993**

(51) Int. Cl.$^6$: **B64D 27/18**

(86) Numéro de dépôt international:
**PCT/FR93/01112**

(87) Numéro de publication internationale:
**WO 94/11248 (26.05.1994 Gazette 1994/12)**

(54) **AVION COMPORTANT SUR CHAQUE AILE AU MOINS UN GROUPE DE DEUX MOTEURS**

FLUGZEUG MIT MINDESTENS ZWEI TRIEBWERKEN FÜ JEDE TRAGFLÄCHE

AIRCRAFT WITH AT LEAST ONE SET OF TWO ENGINES FITTED ON EACH WING

(84) Etats contractants désignés:
**AT BE CH DE DK ES FR GB GR IE IT LI LU MC NL PT SE**

(30) Priorité: **16.11.1992 FR 9213741**

(43) Date de publication de la demande:
**19.10.1994 Bulletin 1994/42**

(73) Titulaire: **AIRBUS INDUSTRIE**
**F-31707 Blagnac (FR)**

(72) Inventeur: **ROEDER, Jean**
**F-31700 Cornebarieu (FR)**

(74) Mandataire: **Keib, Gérard et al**
**Bouju Derambure (Bugnion) S.A.,**
**52 rue de Monceau**
**75008 Paris (FR)**

(56) Documents cités:
FR-A- 1 055 264   FR-A- 1 397 402
GB-A- 1 302 228   US-A- 4 492 353

**Description**

La présente invention concerne les avions et autres aéronefs, notamment à géométrie fixe ou variable, ci-après désignés par "avion" de façon générale, pour plus de commodité, comportant sur chaque aile au moins un groupe moto-propulseur de deux moteurs destiné à équiper de tels avions.

On parlera ci-dessous soit de moteurs, soit de réacteurs, étant bien entendu que la présente invention s'applique également à d'autres types de moteurs d'avion tels que turbo-propulseurs, stato-réacteurs, etc. utilisés de façon classique sur des avions.

Il est connu de réaliser des avions dont les groupes moto-propulseurs sont constitués par deux réacteurs associés, dont les axes sont parallèles entre eux, le plan des axes étant sensiblement orthogonal au plan moyen de l'aile qui s'étend au voisinage de ces réacteurs. Une telle réalisation est décrite dans le US 2 969 938 ou le US 3 047 255.

Dans ces réalisations toutefois, les deux réacteurs sont articulés par rapport à l'aile de sorte que l'angle des axes par rapport au plan de celle-ci est modifiable.

Il est également connu de réaliser des aéronefs du type VTOL dans lesquels les réacteurs d'axes parallèles sont articulés sur le fuselage autour d'axes de rotation parallèles entre eux et parallèles au plan de l'aile. Les axes des réacteurs sont ainsi verticaux au décollage et horizontaux en vol, comme le décrit le US 3 469 803 ou le US 4 492 353.

Dans ces diverses réalisations, il s'agit toutefois d'aéronefs spéciaux, soit comportant une voilure à géométrie variable comme le US 3 047 255, soit du type à décollage vertical, et non d'avions usuels pour le transport régulier de charges ou de passagers.

Par ailleurs, le FR-B-1 055 264 décrit un avion muni de deux réacteurs principaux adaptés à fonctionner en permanence et placés respectivement sous les deux ailes, et comportant également des réacteurs auxiliaires de faible puissance adaptés à ne fonctionner qu'exceptionnellement en cas de panne ou d'insuffisance des réacteurs principaux. Cet avion comporte de préférence, pour chaque réacteur principal logé sous l'aile, un réacteur auxiliaire logé à l'aplomb du réacteur principal, sous l'aile, dans l'aile ou le cas échéant au-dessus de celle-ci. Cette disposition facilite l'entretien du réacteur principal.

Cette solution théoriquement intéressante est en réalité extrêmement coûteuse tout en n'apportant qu'un gain de puissance faible qui n'a pas d'incidence au niveau de la structure de l'avion. L'avantage principal de ces réacteurs auxiliaires est d'apporter un faible supplément de puissance pour les décollages en cas de température élevée au sol.

Le but de la présente invention est de remédier aux inconvénients des avions connus précités et de proposer un avion comportant sur chaque aile au moins un groupe moto-propulseur de deux moteurs, dont les axes sont sensiblement parallèles et sont disposés sensiblement à l'aplomb l'un de l'autre par rapport au plan moyen de l'aile de part et d'autre de cette aile, ce groupe moto-propulseur présentant une grande facilité de montage sur l'aile de l'avion et offrant de plus des avantages importants au point de vue des contraintes, de l'aérodynamisme, de la sécurité et de l'économie de réalisation. Les deux moteurs de chaque groupe sont fixés à un même pylône comportant des moyens pour sa fixation sur l'aile, ce pylône étant conformé de façon que les deux moteurs soient décalés longitudinalement l'un par rapport à l'autre, l'un en avant relativement au bord d'attaque de l'aile, l'autre en arrière.

Suivant l'invention, cet avion est caractérisé en ce que les distances relativement à l'axe de torsion de l'aile des axes des moteurs qui sont adaptés à fonctionner en permanence, sont telles que la résultante des poussées de ces moteurs passe sensiblement par l'axe précité, au moins pour certains régimes, les moteurs étant fixés à un même pylône comportant des moyens pour sa fixation sur l'aile, ce pylône étant conformé de façon qu'un des moteurs soit dans la région du bord de fuite de l'aile, de sorte que les couples de torsion appliqués à l'aile et générés par le poids et la poussée de chaque moteur, sont minimisés en permanence.

L'utilisation d'un pylône unique en une ou plusieurs parties pour monter deux moteurs à l'aplomb l'un de l'autre, de part et d'autre de l'aile, et dont les axes sont décalés en hauteur par rapport au plan moyen de l'aile présente l'avantage de diminuer le moment de torsion de l'aile. De plus l'équilibrage des moteurs par rapport à l'axe de l'aile est facilité, comme on le verra.

Il s'agit ici évidemment de moteurs principaux, et en aucun cas de moteurs auxiliaires au sens de l'enseignement du FR-B-1 055 264 précité. Ces moteurs sont ainsi adaptés à fonctionner en permanence pendant le vol de l'avion, et en aucun cas de manière occasionnelle.

Dans ce contexte, on comprendra que l'opération précitée consistant à minimiser en permanence les couples de torsion appliqués à l'aile et générés par le poids et la poussée de chaque moteur, signifie réduire dans une proportion importante ou très importante lesdits couples de torsion par rapport aux couples correspondants appliqués à une aile supportant deux moteurs fixés sur ou sous cette aile à une certaine distance l'un de l'autre.

Par ailleurs, la disposition des deux moteurs prédéterminée de façon à minimiser les couples de torsion appliqués à l'aile et générés par le poids et la poussée de chaque réacteur, a une incidence importante sur la structure et le coût de l'aile, mais également sur la résistance de la structure de cette aile et donc sur la fiabilité et la sécurité de l'avion.

Selon une réalisation préférée de l'invention, l'axe du moteur décalé vers l'avant est disposé au-dessous de l'aile tandis que l'axe du moteur décalé vers l'arrière est disposé au-dessus de celle-ci et, avantageusement, le bord d'attaque du moteur inférieur avant est situé à une distance du bord d'attaque de l'aile égale à environ 60 % de la corde de l'aile tandis que le moteur supérieur arrière est disposé dans le plan vertical du pylône, au-delà de la zone des turbulences créées par cette aile.

Le pylône reliant les deux moteurs à l'aile peut être d'un seul tenant, auquel cas il sera dit unitaire, ou en plusieurs parties (pylône composé). Dans ce dernier cas, il est de préférence prévu que le pylône composé constitue une unité structurelle avec le caisson de l'aile.

Dans une version intéressante de l'invention, le pylône comporte deux poutres associées portant respectivement le moteur avant et le moteur arrière, ces deux poutres s'étendant dans des directions différentes tout en admettant le plan des axes des moteurs comme plan de symétrie et la poutre portant le moteur arrière traverse le bord de fuite de l'aile.

En particulier, le groupe moto-propulseur comprend avantageusement un pylône unitaire pour la fixation des deux moteurs, ce pylône comportant un poutrage en V fixé au caisson de l'aile, ce poutrage étant constitué par une poutre sensiblement parallèle à l'aile à laquelle fait suite une poutre ascendante disposée transversalement et obliquement par rapport à cette aile.

Dans une autre forme d'exécution avantageuse de l'invention, le pylône composé comporte deux poutres, fixées l'une à l'autre et fixées toutes deux à une nervure du caisson de l'aile, la liaison entre les deux poutres qui forment un V étant située sensiblement à l'aplomb de la face arrière du caisson de l'aile. Cette disposition rend aisé le montage du pylône, tout en renforçant l'unité structurelle avec le caisson de la voilure.

En particulier, l'invention prévoit que la poutre arrière du pylône soit fixée en partie haute à la partie supérieure arrière du caisson de l'aile et en partie basse à la partie inférieure arrière de la poutre avant, de sorte que la poutre supportant le moteur arrière présente au niveau de sa jonction avec la poutre avant une hauteur égale à celle de cette poutre avant augmentée de la hauteur du caisson de l'aile.

Selon une disposition judicieuse des emplacements des moteurs, le pylône est constitué par deux poutres formant un V dont l'angle est déterminé pour que la résultante des poussées puisse passer sensiblement par l'axe de torsion de l'aile au moins dans certains régimes et que les moments dûs au poids des moteurs s'équilibrent par rapport à cet axe. Cet agencement réduit notablement la fatigue de l'aile et offre de plus certaines possibilités intéressantes de pilotage.

L'invention prévoit encore de mettre à profit la poutre ascendante arrière du pylône pour y adapter des voies de guidage pour des volets sustentateurs.

En particulier, les voies de guidage des volets sustentateurs peuvent être portées par une poutrelle qui enfourche la partie inférieure de la poutre arrière du pylône.

D'autres particularités et avantages de l'invention résulteront encore de la description ci-après, en référence aux dessins annexés, donnés à titre d'exemples non limitatifs, dans lesquels :

La Figure 1 est une vue schématique en élévation latérale d'une aile d'avion équipée d'un groupe moto-propulseur conforme à l'invention.

La Figure 2 est la vue de face correspondante à plus petite échelle.

La Figure 3 est la vue en plan correspondant à la Figure 2.

La Figure 4 est la vue en élévation schématisant les flux aérodynamiques relativement au groupe moto-propulseur de la Figure 1 en vol de croisière.

La Figure 5 est une vue analogue à la Figure 4 en position de vol ascendant à forte incidence.

La Figure 6 est une vue schématique analogue à la Figure 1 montrant les points d'attache du pylône à l'aile et des réacteurs au pylône.

Les Figures 6a, 6b, 6c sont des schémas en plan montrant en rappel les positions de ces points d'attache.

La Figure 7 est une vue en élévation montrant un mode de réalisation industrielle du pylône.

La Figure 8 est un schéma en perspective éclatée des poutres du pylône et de leurs annexes.

La Figure 9 est une vue en élévation avec coupe transversale du caisson de l'aile montrant les fixations mutuelles de ce caisson et des poutres du pylône.

La Figure 10 est un schéma perspectif éclaté illustrant les moyens de fixation de la poutre inférieure du pylône.

La Figure 11 est une vue de face en élévation suivant XI de la Figure 9 montrant certains des moyens de fixation de la partie inférieure de la poutre du pylône au caisson de l'aile.

La Figure 12 est un schéma perspectif des moyens de fixation prévus pour la poutre arrière du pylône.

La Figure 13 est un schéma en élévation latérale montrant les moyens prévus pour la liaison des volets de sustentation au pylône.

La Figure 14 est la vue en élévation de la poutrelle portant les voies de roulement pour lesdits volets.

La Figure 15 est la vue en plan correspondante.

La Figure 16 est une coupe selon XVI-XVI de la Figure 14 à plus grande échelle.

La Figure 17 est une vue schématique en plan d'un avion hexa-réacteurs conforme à l'invention.

La Figure 18 est une vue analogue à la Figure 17 d'un avion octo-réacteurs.

La Figure 19 est une coupe transversale schématique selon XIX-XIX de la Figure 1.

La Figure 20 est une vue schématique analogue à la Figure 1 montrant une variante de réalisation d'un pylône composé.

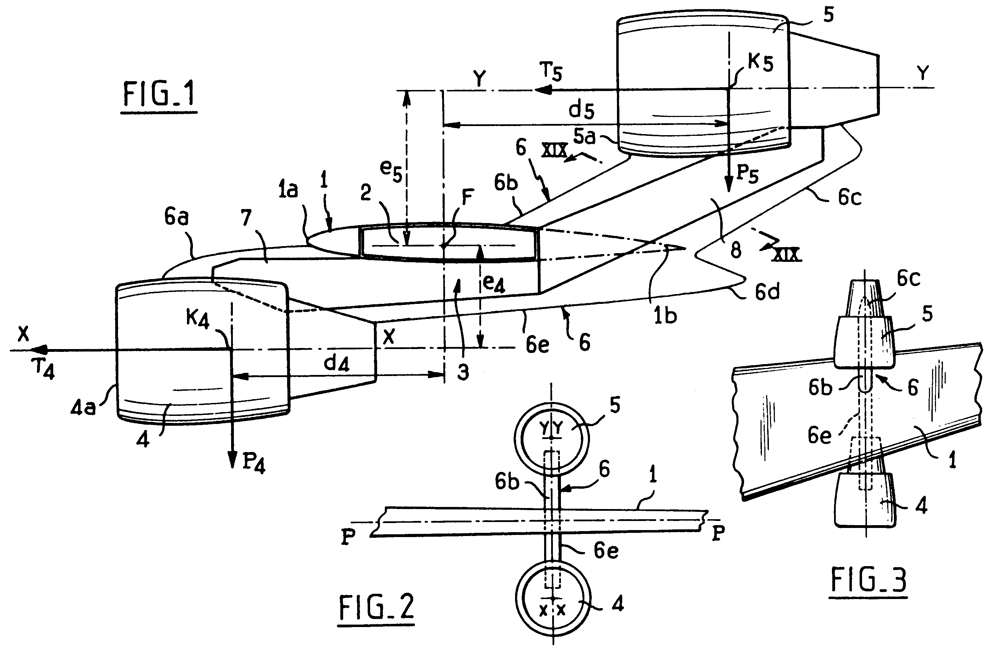

En se reportant aux figures 1 à 3, on voit une réalisation avantageuse de l'invention pour un avion ou autre aéronef à voilure fixe et dont l'aile 1 comporte de manière connue un caisson intérieur 2 de section sensiblement rectangulaire et qui constitue la structure porteuse de l'appareil.

Conformément à la présente invention, il est adjoint à l'aile 1 un groupe moto-propulseur essentiellement constitué d'un pylône globalement désigné par 3 et de deux réacteurs 4 et 5 fixés sur lui. Les axes géométriques XX et YY des réacteurs 4 et 5, qui correspondent à leurs axes de poussée, sont parallèles entre eux et sont disposés sensiblement à l'aplomb l'un de l'autre par rapport aux plan moyen P-P de l'aile 1 (Figure 2). Le pylône 3, de structure unitaire ou composée, comporte des moyens qui seront décrits plus loin pour l'assujettir au caisson 2 de l'aile 1. Il est d'autre part réalisé à la manière d'un V ouvert de manière que les deux réacteurs 4 et 5 fixés respectivement vers les extrémités antérieure et postérieure de ce pylône soient décalés longitudinalement l'un par rapport à l'autre, le réacteur 4 étant situé en avant par rapport au bord d'attaque 1a de l'aile 1 et le réacteur 5 étant décalé vers l'arrière par rapport au bord de fuite 1b de l'aile 1.

Dans la réalisation décrite, l'axe XX du réacteur 4 décalé vers l'avant est disposé au-dessous de l'aile 1 alors que l'axe YY du réacteur 5 décalé vers l'arrière est disposé au-dessus de cette aile. Cette disposition dans laquelle le réacteur 4 situé au-dessous de l'aile est décalé vers l'avant et le réacteur 5 situé au-dessus de l'aile est décalé vers l'arrière correspond à une réalisation préférée de l'invention.

La position des réacteurs relativement à l'aile et, par voie de conséquence, la longueur et l'angle d'ouverture du pylône 3 en forme de V sont de préférence déterminés en fonction de considérations à la fois statiques, dynamiques et aérodynamiques.

Sur la Figure 1, on a représenté en F l'axe de flexion de l'aile 1, en K4 et K5 les centres de gravité respectifs des réacteurs 4 et 5, en P4 et P5 leurs poids respectifs et en T4 et T5 les poussées axiales.

Conformément à la présente invention, il est de préférence fait en sorte que les moments des poids P4 et P5 par rapport à l'axe de torsion F de l'aile 1 soient égaux, ce qui se traduit par l'équation : $P4 \times d_4 = P5 \times d_5$, où $d_4$ et $d_5$ désignent les distances des centres de gravité par rapport à l'aplomb de l'axe de flexion.

Complémentairement, il est également fait en sorte que les moments des poussées T4 et T5 par rapport à l'axe F soient égaux lorsque les réacteurs sont au même régime, ce qui se traduit par la nouvelle équation $T4 \times e_4 = T5 \times e_5$, où $e_4$ et $e_5$ désignent respectivement les distances des axes XX et YY par rapport à l'axe F.

Si les poids des réacteurs sont les mêmes, il en est également de même pour les distances $d_4$ et $d_5$ et si l'on fait en sorte que les poussées des réacteurs soient les mêmes, il en va également ainsi pour les distances $e_4$ et $e_5$. On comprend toutefois qu'il est possible, dans le cadre de l'invention, de disposer sur le pylône 3 des réacteurs 4 et 5 de poids et de puissance différents sous conditions d'aménager en conséquence les distances d et e de façon que, au moins en certaines circonstances, les poids des réacteurs s'équilibrent par

rapport à l'axe F et que la résultante des poussées des réacteurs passe par F. Ces conditions réduisent au minimum les efforts supportés par le caisson 2 de l'aile 1 et, par conséquent, entraînent une réduction de la fatigue de celui-ci.

Il est clair d'autre part que si on modifie différentiellement les poussées T4 et T5 de manière que le moment résultant en F ne soit plus nul, on peut communiquer à l'aile 1 un couple de basculement favorisant le cabré ou le piqué, ce qui offre des possibilités accrues de pilotage.

Les emplacements des réacteurs et, en conséquence, la longueur des deux branches du pylône 3 sont encore déterminés en fonction de considérations aérodynamiques pour que ces réacteurs soient isolés le plus possible des zones de perturbation de l'écoulement des filets d'air au niveau de l'aile 1.

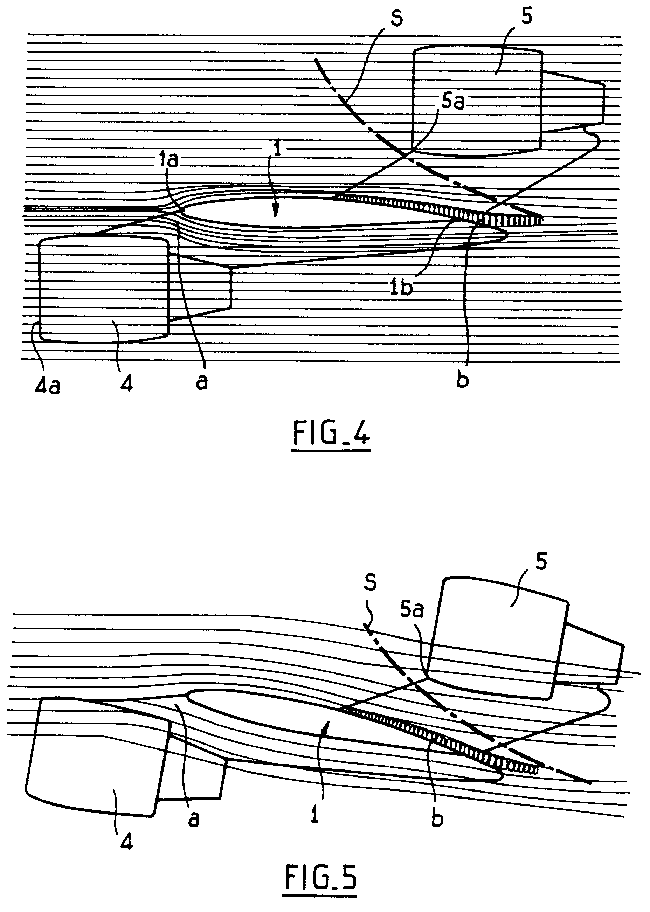

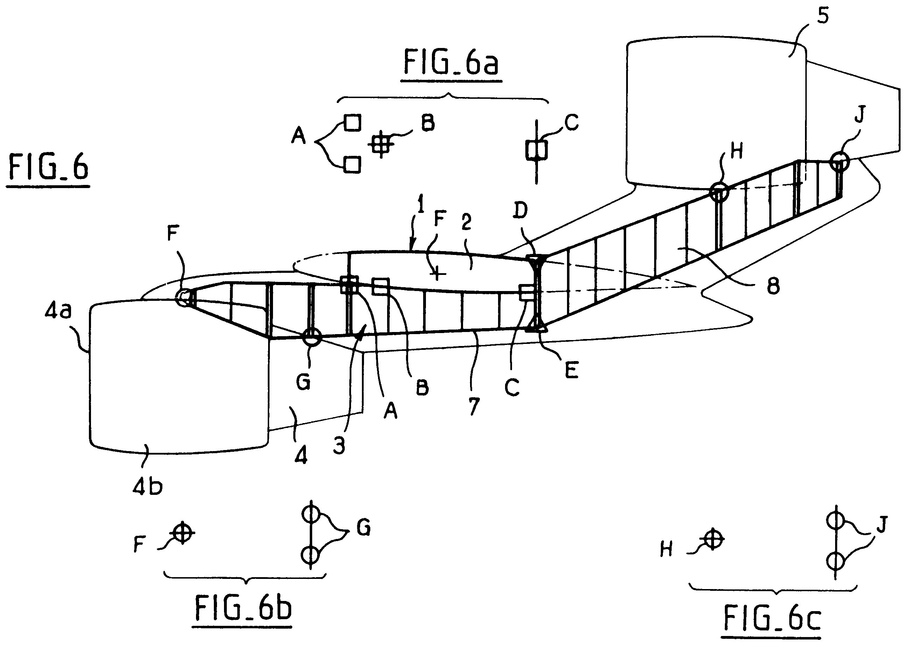

Sur la Figure 4, on a montré en a la zone de compression au niveau du bord d'attaque 1a de l'aile 1 et en b la zone de turbulences s'établissant sur l'extrados de l'aile vers le bord de fuite 1b de celle-ci. La position et l'amplitude des zones a et b dépendent évidemment de la vitesse de l'avion, mais aussi de l'incidence de l'aile, comme on le voit Figure 5, où l'appareil est montré avec une forte incidence ascendante.

Pour répondre à ces conditions, il est prévu de disposer le bord d'attaque 4a du réacteur inférieur avant 4 à une distance relativement au bord d'attaque 1a de l'aile 1 sensiblement égale à 60 % de la largeur de cette aile.

En ce qui concerne le réacteur supérieur arrière 5, on établira d'abord la courbe limite S au-dessous de laquelle l'écoulement des filets d'air peut être perturbé, non seulement du fait des turbulences liées à l'extrados de l'aile 1, mais aussi de celles résultant de l'inclinaison des axes des réacteurs en montée et en descente. Cette courbe limite S varie d'ailleurs avec l'incidence et est plus pénalisante en vol horizontal qu'en vol ascendant, comme on le voit en comparant les Figures 4 et 5.

Ayant établi la courbe S, on fera en sorte que le bord d'attaque inférieur 5a du réacteur supérieur arrière 5 soit situé au-delà de la courbe S dans toutes les conditions normales de vol et, en particulier, vol horizontal et vol ascendant.

Les performances aérodynamiques du groupe moto-propulseur sont renforcées par la mise en place d'un carénage profilé dont le contour extérieur est schématisé en 6 sur la Figure 1. Le carénage 6 se raccorde à celui de l'aile 1 et il enveloppe à la fois la poutre inférieure avant 7 et la poutre ascendante arrière 8 constituant le pylône 3. En particulier, le carénage 6 comporte un capot avant 6a qui coiffe le nez de la poutre 7, un capot 6b ascendant qui relie l'extrados de l'aile 1 au capot extérieur du réacteur 5. Le capot 6b se termine vers l'arrière au-delà de la poutre 8 par une partie effilée 6c qui se raccorde à une partie en pointe 6d reliée au carénage inférieur 6e de la poutre 7 et prolongeant le bord de fuite 1b de l'aile 1.

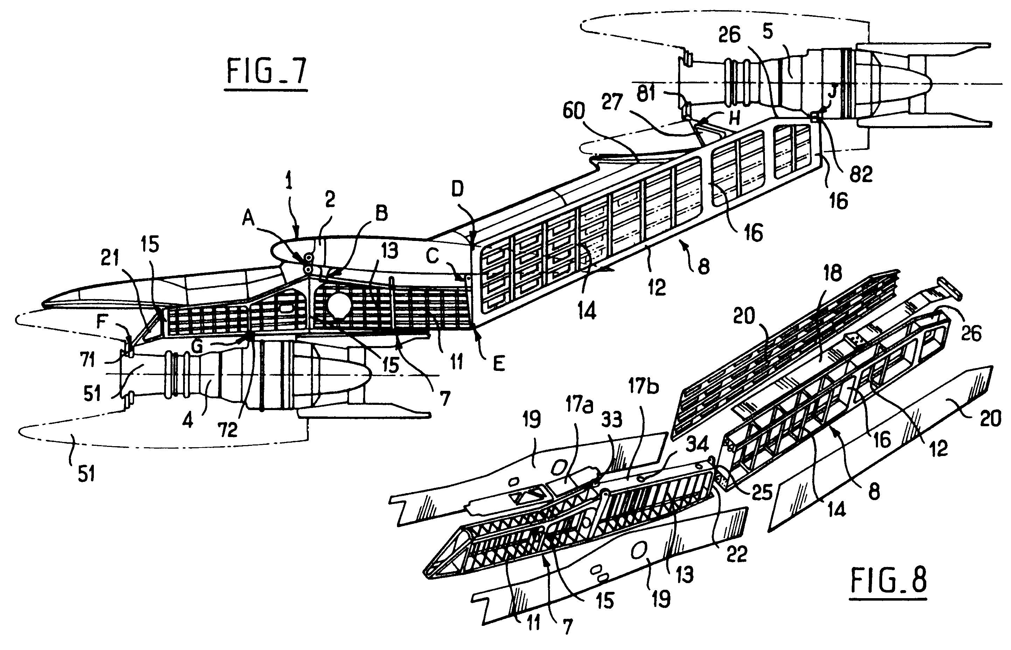

Comme on le voit sur la Figure 7, le carénage 6b en partie haute constitue une console 60 pour le capot antérieur du réacteur 5, ce qui permet un raccordement aérodynamique de ces pièces.

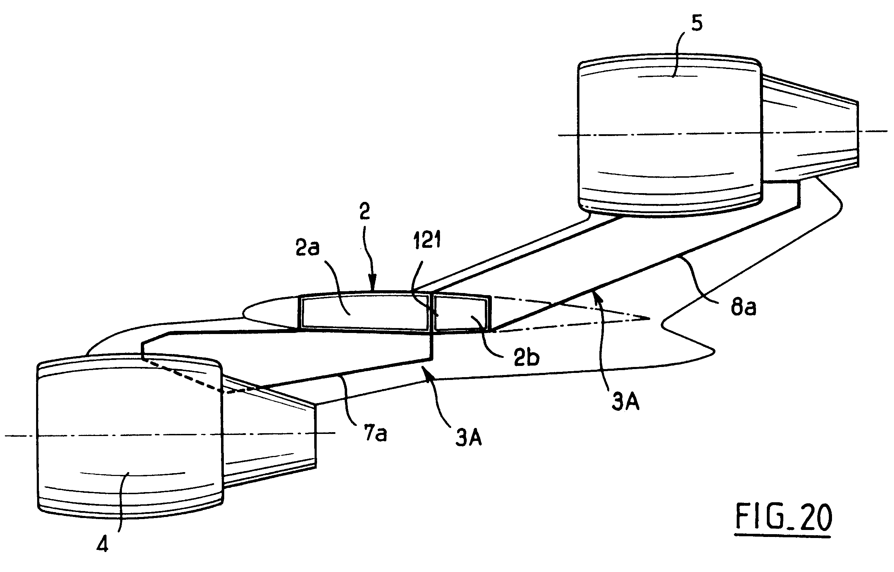

La fixation des parties avant 6b du carénage sur la poutre arrière 8 est assurée par des nervures terminales 111 (Fig. 19) boulonnées sur des nervures longitudinales 112 de la poutre 8. La fixation est renforcée par des rivets ou boulons 113 traversant la poutre et pénétrant dans des ouvertures prévues à cet effet dans la membrure postérieure du carénage 6b. Pour le carénage arrière 6c, la fixation est assurée par l'emboîtement de nervures 114, 115 qui sont boulonnées entre elles.

On indiquera ci-après de manière non limitative un certain nombre d'avantages techniques apportés par le groupe moto-propulseur à deux réacteurs en tandem du genre visé par l'invention. Le groupement des deux réacteurs sur un même pylône, de structure unitaire ou composée, permet d'équilibrer les poussées par rapport à l'aile autour de l'axe de torsion de celle-ci et de donner ainsi au centre de poussée une position avantageuse par rapport au centre de traînée.

L'équilibrage des poids par rapport à l'axe de torsion F est également très favorable à la stabilité de l'appareil et réduit la fatigue de l'aile. De plus, il permet de placer à la distance optimale le groupe moto-propulseur par rapport à l'axe du fuselage et ceci sur une longueur appréciable de l'aile. Enfin, dans ces conditions, le moment de flexion de l'aile lié au poids des réacteurs peut être réduit relativement à une configuration classique où les réacteurs sont échelonnés le long de l'aile.

Le fait de rassembler deux réacteurs au même emplacement facilite le montage de ces réacteurs et de plus réduit les mouvements de lacet provoqués par des réacteurs écartés l'un de l'autre le long de l'aile, notamment en cas de panne de l'un des réacteurs. Ceci limite la surface nécessaire pour le gouvernail ou son angle de braquage.

Le groupe moto-propulseur à deux réacteurs en tandem peut avantageusement être mis à la place d'un réacteur d'une puissance double de celle de chacun des deux réacteurs.

Cette faculté augmente la possibilité de choix quant aux caractéristiques des réacteurs. Les dimensions du capot de ces réacteurs peuvent être réduites. De ce fait, l'espace libre au sol par rapport à la partie inférieure 4b du réacteur 4 est rendu moins critique, ce qui permet d'équiper l'avion d'un train d'atterrissage plus court et plus léger avec en conséquence un accès facilité à la cabine et aux soutes.

Le groupement de deux réacteurs de plus faible volume en tandem évite les endommagements multiples en cas de rupture des ailettes. En effet, la structure prévue par l'invention évite tout risque d'impact sur le réacteur adjacent.

Deux réacteurs de faible volume génèrent moins de bruit qu'un réacteur unique de puissance double.

La maintenance de deux réacteurs de dimensions réduites par rapport à un réacteur unique de puissance double est également plus économique tant en ce qui concerne le prix des pièces que la facilité de montage. Les réacteurs de faible puissance ont aussi un ratio prix/poussée qui est plus avantageux que pour des gros réacteurs. De ce fait, l'aménagement de deux réacteurs pour la même poussée entraîne une réduction du coût de réalisation.

Les risques d'une traînée d'interférence en fonction de la position du réacteur avant sont réduits avec la dimension de ce dernier. Par ailleurs, le réacteur arrière en partie haute n'engendre pas une traînée significative. Le groupe moto-propulseur conforme à l'invention est donc avantageux en ce qui concerne la réduction de la traînée.

L'installation d'un réacteur au-dessus de l'aile si ce dernier était en position avant, serait désavantageuse en ce qui concerne la poussée aérodynamique. Cet inconvénient est évité par l'invention en disposant le réacteur arrière 5 au dessus de l'aile et sans risques d'interférences avec le réacteur antérieur 4.

Au point de vue constructif, la présence d'un seul pylône au-dessous de l'aile permet de disposer les servitudes des réacteurs aussi bien vers l'avant que vers l'arrière du pylône. On peut ainsi optimiser leur emplacement. Ceci autorise aussi une duplication de ces servitudes, à titre de redondance. Il apparaît ainsi que la disposition d'un pylône unitaire ou composé pour deux réacteurs dans les conditions spécifiées par l'invention se traduit par un nombre considérable d'avantages techniques.

On va maintenant détailler, à titre d'exemples, certains aspects constructifs de réalisations du groupe moto-propulseur selon l'invention et de sa liaison avec l'aile de l'avion.

Comme on le voit sur la Figure 6, la poutre avant 7 du pylône 3 est suspendue au-dessous du caisson 2 de l'aile 1 par des attaches respectivement reliées en A à la face avant du caisson de l'aile, en B à la face inférieure du caisson en arrière du point A et en C à la face arrière du caisson.

Les deux poutres 7 et 8 du pylône 3 peuvent constituer une structure d'un seul tenant mais de préférence le pylône 3 est réalisé par l'assemblage de deux poutres indépendantes 7 et 8. Dans la première hypothèse, la poutre 8 dans sa partie inférieure est fixée en D sur la face arrière du caisson 2, le point D étant sensiblement à l'aplomb du point C. Dans le cas d'un pylône en deux parties, la poutre arrière 8 est également rattachée en E à la partie inférieure arrière de la poutre avant 7.

Dans la réalisation préférée décrite où la poutre arrière 8 est fixée en partie haute en D à la partie supérieure arrière du caisson 2 et en partie basse en E à la partie inférieure arrière de la poutre avant 7, il est de préférence prévu que la hauteur de la poutre 8 à sa partie antérieure soit sensiblement égale à la hauteur de la poutre avant 7 augmentée de la hauteur du caisson 2 de l'aile 1. Des moyens dont certains seront décrits plus loin peuvent être prévus pour assurer entre les pièces 2, 7 et 8 une liaison rigoureusement rigide à l'égard de toutes les sollicitations statiques et dynamiques pouvant s'exercer en cette région.

Chaque réacteur 4 ou 5 est fixé sur le pylône 3 en deux emplacements F et G pour le réacteur 4, H et J pour le réacteur 5. De préférence, les moyens de fixation prévus pour les deux réacteurs sont identiques bien que le réacteur avant 4 soit suspendu et le réacteur arrière 5 supporté.

Le pylône 3, en un seul tenant ou en deux parties assemblées, est de préférence constitué par une poutre nervurée.

Sur la Figure 6, on a schématisé par un trait les nervures normales et par deux traits les nervures renforcées qui sont disposées au niveau des divers points de fixation du pylône au caisson de l'aile et des réacteurs au pylône.

Les fixations ainsi prévues sont schématisées en plan aux Figures 6a, 6b et 6c. Des exemples de réalisation de telles fixations seront détaillés plus loin.

Dans une réalisation particulière montrée Fig. 7 et 8, pour laquelle le pylône 3 est constitué par l'assemblage d'une poutre inférieure avant 7 et d'une poutre ascendante arrière 8, chaque poutre comprend une âme profilée nervurée 11, 12, respectivement à section rectangulaire, pourvue de nervures 13, 14, régulièrement échelonnées et de nervures de renforcement 15, 16 aux emplacements indiqués plus haut.

Les âmes 11, 12 sont recouvertes par des couvercles 17a, 17b et 18 respectivement et sont bordées latéralement par des plaques 19, 20, de préférence qui présentent sur leur face interne des nervures de renforcement, comme montré sur l'une des joues 20.

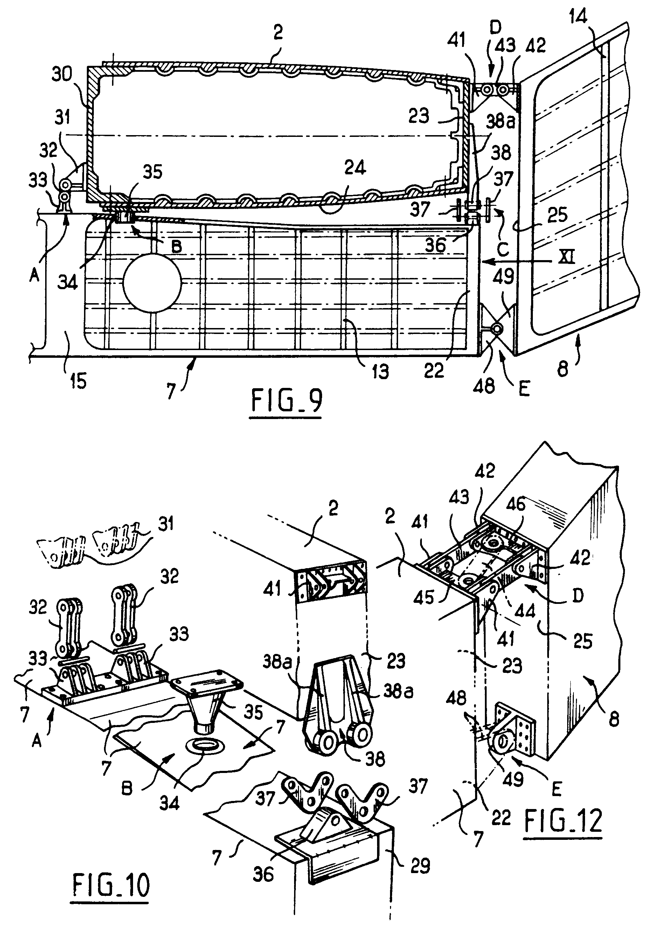

La poutre antérieure 7 comporte de façon connue un nez triangulaire 21 dans la région F de fixation du réacteur 4. Elle présente d'autre part un profil en dos d'âne dans la région A d'attache au caisson 2 de l'aile 1 et la face arrière 22 de l'âme il est située sensiblement dans le plan de la face arrière 23 du caisson 2, comme on le voit à la Figure 9.

La poutre ascendante arrière 8 à structure en parallélogramme présente en regard des faces 22 et 23 précitées une hauteur sensiblement égale à la hauteur totale de la poutre 7 et du caisson 2 en position d'attachement. La face antérieure 25 de la poutre 8 est munie de moyens de fixation pour sa liaison à la fois au caisson 2 et à la poutre 7. Ces moyens seront décrits plus loin. L'extrémité opposée de la poutre 8 présente un méplat 26 correspondant au point de fixation J et un nez 27 analogue au nez 21 de la poutre 7 mais en position inversée. Le nez 27 est situé à l'emplacement du point de fixation H pour le réacteur supérieur 5. Un écran thermique non figuré est aménagé entre la partie supérieure de la poutre 8 et notamment sur le méplat 26 pour protéger cette poutre de la chaleur du réacteur 5.

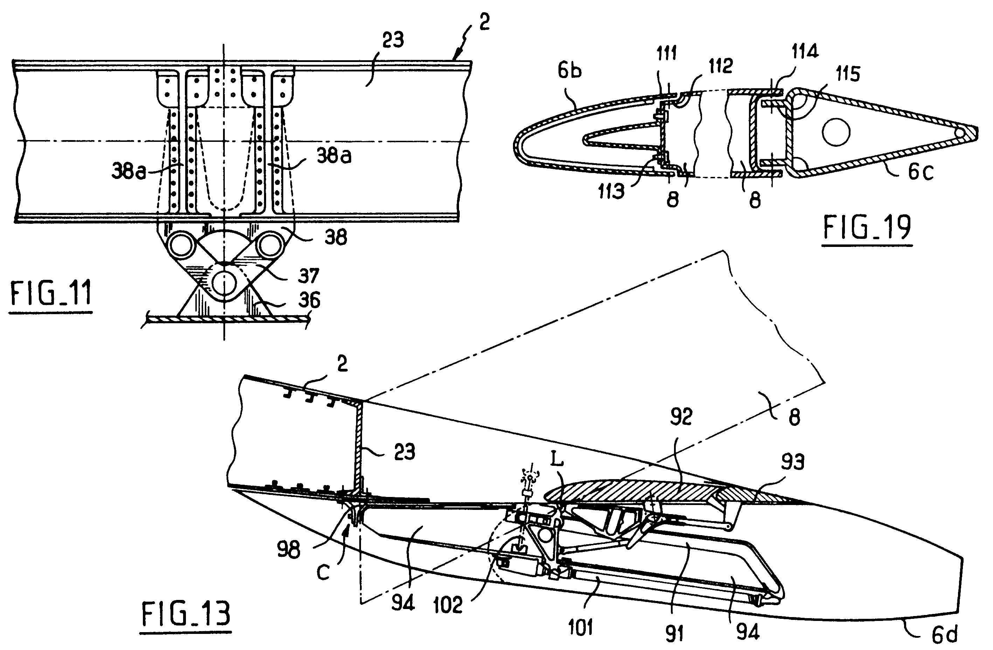

Comme on le voit également sur les figures 10 et 11, les moyens de fixation de la poutre inférieure avant 7 sur le caisson 2 de l'aile 1 comprennent dans la région A une paire de chapes multiples 31 fixées sur la face avant 30 du caisson 2, auxquelles est attachée une paire de biellettes multiples 32 assurant la liaison avec une paire de chapes multiples 33 appartenant à la superstructure de la poutre 7.

Au niveau du point B de fixation le couvercle 17b de la poutre 7 présente un orifice 34 pour une cheville 35 fixée sur la face 24 du caisson 2.

Enfin au niveau du point C, la face 29 de la poutre inférieure 7 porte une oreille 36 de part et d'autre de laquelle sont montées deux biellettes en V 37 articulées à une oreille double 38 assujettie sur la face arrière 23 du caisson 2. Comme on le voit sur la figure 11, l'oreille double 38 est de préférence ménagée à la base d'une fourche double dont les branches 38a sont fixées sur toute la hauteur de la face 23 du caisson d'aile 2 et enserrent celle-ci. Ce système de liaison permet d'absorber toutes les contraintes auxquelles peut être soumise la liaison entre la poutre inférieure 7 et le caisson 2 dans les diverses conditions de fonctionnement de l'avion.

L'assujettissement mutuel des poutres 7, 8 et du caisson 2 au niveau des faces 22, 25 et 23 de ces pièces est complété de la manière suivante, comme on le voit Figure 9 et Figure 12 : au niveau du point D de fixation, les parties supérieures des faces 23 et 25 portent chacune une double chape à deux oreilles 41, 42 respectivement, reliée par des biellettes verticales 43. La liaison est complétée par une biellette horizontale oblique 44 disposée entre deux oreilles 45 et 46.

En partie basse, aux environs du point E, la fixation est assurée par une chape 48 ménagée au bas de la face 22 dans laquelle pénètre une oreille 49 fixée à la base de la face 25 de la poutre 8. Les moyens de fixation ainsi prévus confèrent à l'ensemble toute la rigidité et la sécurité désirables.

Les moyens de fixation des réacteurs 4 et 5 sur le pylône 3 étant analogues selon l'invention bien que les positions de ces réacteurs soient inversées, le réacteur 4 étant suspendu alors que le réacteur 5 est en appui, on décrira seulement la fixation du réacteur 4 d'un type en lui-même connu.

La liaison au point F entre le nez 21 de la poutre 7 et le cône d'entrée 51 du réacteur (Figure 7) est assurée de façon connue au moyen de trois boulons 71. Les seconds moyens de fixation situés au point G comprennent également de façon connue une barrette 72 transversale à l'axe du réacteur fixée sous la poutre 7 et sur laquelle sont brochées deux oreilles appartenant à la tuyère arrière du réacteur. Les organes de fixation 71, 72 ainsi constitués sont schématisés sur la Figure 7, ainsi que les organes semblables 81, 82 prévus pour le réacteur 5 et assurant la liaison entre celui-ci et respectivement le nez 27 et le méplat 26 de la partie arrière de la poutre 8. De préférence, les organes de fixation 71 et 81 sont sensiblement disposés au niveau du centre de gravité des réacteurs concernés.

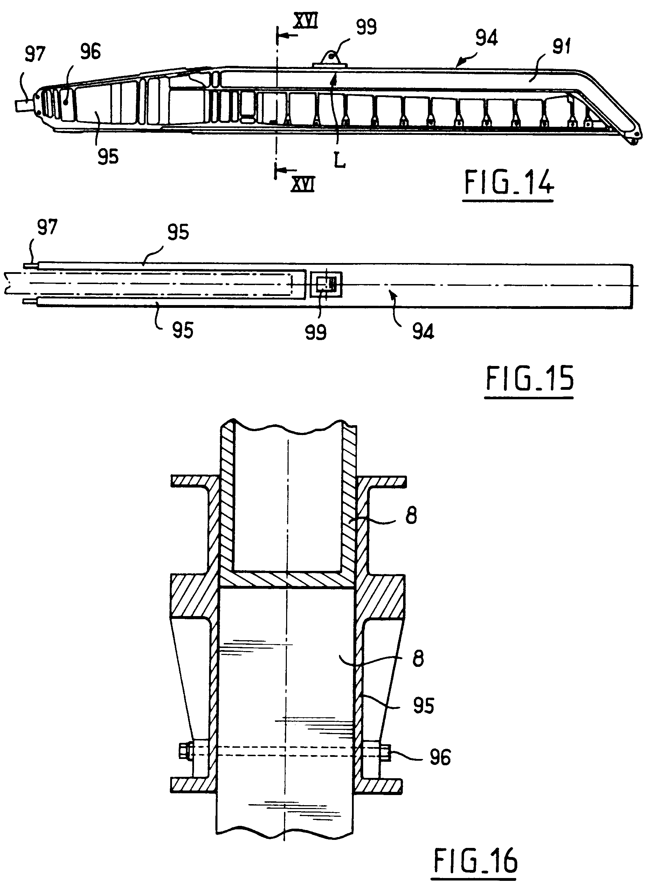

Selon une autre particularité intéressante de l'invention, il est prévu de mettre à profit l'existence de la poutre 8 du pylône 3 pour assurer un guidage des volets sustentateurs entre leurs positions de repos et de service. Les moyens correspondants dans un exemple d'exécution sont montrés aux Figures 13, 16.

Selon cette réalisation, les voies de guidage 91 pour les volets sustentateurs 92, 93 articulés l'un à l'autre sont disposées latéralement sur une poutrelle allongée 94 qui est rapportée sur le pylône arrière ascendant 8. La poutrelle 94 est orientée sensiblement dans le prolongement de la poutre inférieure avant 7 du pylône 3. La poutrelle 94 est de préférence constituée par une fourche dont les joues 95 enserrent la partie antérieure de la poutre 8 et sont boulonnées et serrée sur celle-ci par des tiges filetées 96 (Fig. 16).

Comme on le voit sur les figures 13 à 15, les extrémités des joues 95 sont munies de brides de fixation 97 qui pénètrent dans des oreilles 98 ménagées au niveau du point C, c'est-à-dire à la base de la face 23 du caisson d'aile 2.

Dans sa partie arrière, la poutrelle 94 est fixée au point L correspondant à l'endroit où elle quitte la face inférieure de la poutre arrière 8. La fixation en L est assurée par une oreille 99 brochée dans une chape non figurée ménagée sur la face précitée de la poutre 8.

Le mécanisme d'entraînement des volets 92 et 93 est assuré par un vérin à vis 101 de type en lui-même connu dont le moteur d'entraînement est avantageusement logé à l'intérieur du pylône 8 grâce à un système de renvoi d'angle 102. La poutrelle 94 est intégrée à la partie arrière 6d du carénage antérieurement décrit, laquelle se raccorde au carénage 6c de la poutre 8.

On voit ainsi que la présence de la poutre ascendante 8 du pylône 3 offre un support avantageux pour la mise en place des voies de guidage des volets sustentateurs 92, 93, ce qui permet un déploiement important pour ces derniers sans augmenter sensiblement le poids des structures de support.

Il est évident que l'invention n'est pas limitée aux réalisations précitées et que l'on peut apporter à celles-ci de nombreux changements et modifications sans sortir du domaine de l'invention.

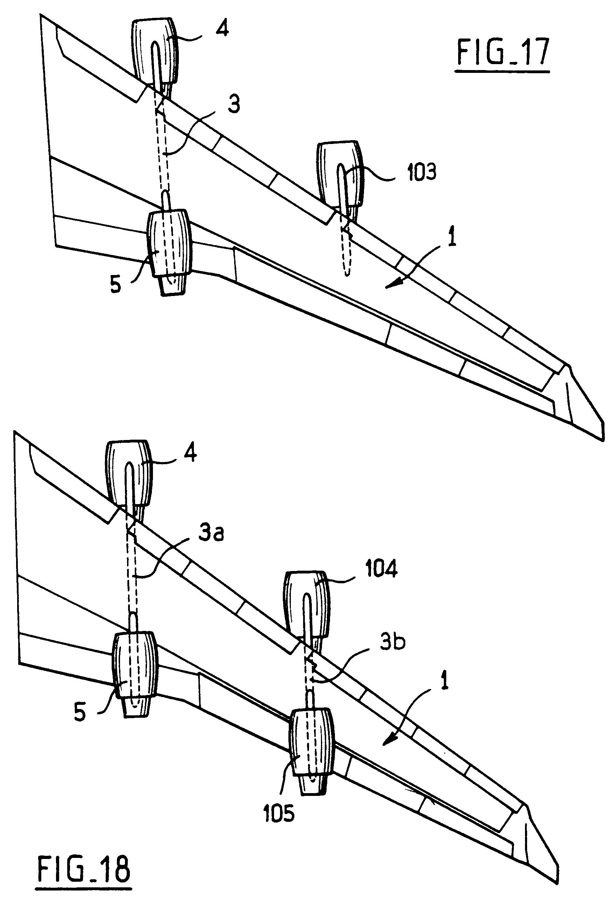

On peut notamment réaliser d'autres configurations d'avion à 6 ou 8 réacteurs. Une réalisation à 6 réacteurs est montrée à la figure 17, le réacteur additionnel 103 étant situé au-delà du pylône 3 portant les réacteurs 4, 5.

On peut aussi réaliser un appareil à 8 réacteurs (Fig. 18) comportant sur chaque aile deux pylônes 3a et 3b, le pylône 3b portant lui-même un réacteur inférieur avant 104 et un réacteur supérieur arrière 105. Bien entendu, les réacteurs latéraux 104 et 105 peuvent être d'une puissance plus faible que les réacteurs principaux 4 et 5.

Sans sortir du cadre de l'invention on pourrait aussi disposer le réacteur avant au-dessus de l'aile et le réacteur arrière en dessous, bien que cette version soit moins favorable à la fois d'un point de vue aérodynamique et pour la garde au sol du réacteur inférieur.

Dans la réalisation de la Figure 20, donnée à titre de variante d'un pylône 3A à structure composée, celui-ci comprend deux poutres distinctes formant un V, respectivement une poutre avant 7a pour le réacteur 4 et une poutre arrière 8a pour le réacteur 5. La poutre 7a est fixée sous la partie antérieure 2a du caisson d'aile 2. La poutre arrière 8a coiffe la partie arrière 2b du caisson d'aile 2. Il est avantageusement prévu que les parois terminales postérieure de la poutre 7a et antérieure de la poutre 8a soient respectivement solidarisées à une même nervure 121 située entre les parties 2a et 2b du caisson 2. Il est ainsi réalisé un unité structurelle entre les deux parties du pylône et le caisson d'aile.

Enfin, tout ce qui a été décrit ci-dessus en relation avec des réacteurs peut s'appliquer intégralement avec d'autres types de moteurs adaptés à équiper des avions.

## Revendications

1. Avion comportant sur chaque aile (1) au moins un groupe moto-propulseur de deux moteurs (4, 5) dont les axes (XX et YY) sont parallèles et disposés sensiblement à l'aplomb l'un de l'autre par rapport au plan moyen de l'aile, de part et d'autre de cette aile, les deux moteurs (4, 5) étant décalés longitudinalement l'un par rapport à l'autre, l'un (4) en avant relativement au bord d'attaque (1a) de l'aile (1), l'autre en arrière, caractérisé en ce que les distances ($e_4$, $e_5$) relativement à l'axe de torsion (F) de l'aile des axes des moteurs (4, 5) qui sont adaptés à fonctionner en permanence, sont telles que la résultante des poussées de ces moteurs passe sensiblement par l'axe (F) précité, au moins pour certains régimes, les moteurs (4, 5) étant fixés à un même pylône (3) comportant des moyens pour sa fixation sur l'aile (1), ce pylône étant conformé de façon qu'un des moteurs (4, 5) soit dans la région du bord de fuite (1b) de l'aile (1), de sorte que les couples de torsion appliqués à l'aile et générés par le poids et la poussée de chaque moteur (4, 5), sont minimisés en permanence.

2. Avion conforme à la revendication 1 caractérisé en ce que l'axe (XX) du moteur (4) décalé vers l'avant est disposé au-dessous de l'aile (1) tandis que l'axe (YY) du moteur (5) décalé vers l'arrière est disposé au-dessus de celle-ci.

3. Avion conforme à la revendication 2 caractérisé en ce que le bord d'attaque (4a) du moteur inférieur avant (4) est situé à une distance du bord d'attaque (1a) de l'aile égale à environ 60 % de la corde de l'aile (1).

4. Avion conforme à l'une des revendications 2 ou 3 caractérisé en ce que le moteur supérieur arrière (5) est disposé à une distance de l'aile située au-delà de la zone de turbulences (b) au niveau de l'extrados et du bord de fuite (1b) de cette aile.

5. Avion conforme à l'une des revendications 1 à 4 caractérisé en ce que le pylône (3 ou 3A), de structure unitaire ou composée, comporte deux poutres (7, 8) ou (7a, 8a) associées portant respectivement le moteur avant (4) et le moteur arrière (5), ces deux poutres (7, 8) s'étendant dans des directions différentes tout en admettant le plan des axes (XX et YY) des moteurs (4, 5) comme plan de symétrie.

6. Avion conforme à la revendication 5 caractérisé en ce que la poutre (8 ou 8a) portant le moteur arrière (5) traverse le bord de fuite (1b) de l'aile (1).

7. Avion conforme à l'une des revendications 1 à 6 caractérisé en ce que le groupe moto-propulseur comprend un même pylône (3), de structure unitaire ou composée, pour la fixation des deux moteurs (4, 5), ce pylône comportant un poutrage en V fixé au caisson (2) de l'aile (1), ce poutrage étant constitué par une poutre (7) sensiblement parallèle à l'aile (1) à laquelle fait suite une poutre ascendante (8) disposée transversalement et obliquement par rapport à cette aile (1).

8. Avion conforme à l'une des revendications 5 à 7 caractérisé en ce que la poutre avant (7) du pylône (3) est suspendue au-dessous de l'aile (1) par des attaches (31, 32, 33) et (36, 37, 38) respectivement reliées à la face avant (30) du caisson (2) de l'aile et à sa face arrière (23), ledit caisson (2) comportant de plus une cheville (35) qui pénètre dans un orifice (34) de la face supérieure de ladite poutre (7).

9. Avion conforme à l'une des revendications 5 à 8 caractérisé en ce que le pylône (3) comporte deux poutres en V (7, 8), fixées l'une à l'autre et fixées toutes deux au caisson (2) de l'aile, la liaison entre les deux poutres (7, 8) étant située sensiblement à l'aplomb de la face arrière (23) du caisson de l'aile.

10. Avion conforme à la revendication 9 caractérisé en ce que la poutre arrière (8) du pylône (3) est fixée en partie haute (en D) à la partie supérieure arrière du caisson (2) de l'aile et en partie basse (en E) à la partie inférieure arrière de la poutre avant (7).

11. Avion conforme à l'une des revendications 1 à 10 caractérisé en ce que le pylône (3) est constitué par l'assemblage de deux poutres (7, 8), la poutre (8) supportant le moteur arrière (5) présentant au niveau de sa jonction avec la poutre avant (7) une hauteur égale à celle de cette poutre avant (7) augmentée de la hauteur du caisson (2) de l'aile (1).

12. Avion conforme à l'une des revendications 1 à 11 caractérisé en ce que chaque moteur (4, 5) est fixé en deux emplacements sur le pylône, les moyens de fixation étant analogues pour le moteur avant (4) et le moteur arrière (5).

13. Avion conforme à l'une des revendications 1 à 12 caractérisé en ce que le pylône (3) portant les deux moteurs (4, 5) comporte un carénage profilé (6), aminci (en 6c) vers l'arrière dans la partie supportant le moteur supérieur (5) de manière à constituer un panneau régulateur de l'écoulement de l'air sur l'aile.

14. Avion conforme à l'une des revendications 1 à 13, caractérisé en ce que la distance ($d_4$, $d_5$) séparant les centres de gravité (K4, K5) des moteurs (4, 5) de l'axe de torsion (F) de l'aile en projection sur le plan de celle-ci est telle que les moments dus au poids des moteurs s'équilibrent sensiblement par rapport à l'axe de torsion de l'aile.

15. Avion conforme à l'une des revendications 1 à 14 caractérisé en ce que le pylône (3, 3A) est constitué par deux poutres en V (7, 8) ou (7a, 8a) dont l'angle est déterminé pour que la résultante des poussées passe sensiblement par l'axe de torsion (F) de l'aile et que les moments dus au poids des moteurs s'équilibrent par rapport à cet axe.

16. Avion conforme à l'une des revendications 1 à 15 caractérisé en ce que le pylône (3 ou 3A) comporte quatre points d'attache pour chaque moteur (4, 5), à savoir trois points d'attache avant (7, 8) et un point d'attache arrière (72, 82), les points d'attache avant étant disposés sensiblement à l'aplomb du centre de gravité (K4, K5) de chaque moteur (4,5).

17. Avion conforme à la revendication 16 caractérisé en ce que les moyens d'attache des moteurs au pylône sont les mêmes pour le moteur avant (4) et le moteur arrière (5).

18. Avion conforme à l'une des revendications 1 à 17 caractérisé en ce que le pylône (3) comporte un écran thermique interposé entre ce pylône et l'un au moins des moteurs qui lui est fixé.

19. Avion conforme à l'une des revendications 1 à 18 caractérisé en ce que le pylône (3) porte latéralement des voies de guidage (91) pour des volets sustentateurs (92, 93).

20. Avion conforme à la revendication 19 caractérisé en ce que les voies de guidage (91) s'étendent vers l'arrière au-delà de la poutre (8) du pylône (3) portant le moteur supérieur arrière (5).

21. Avion conforme à l'une des revendications 20 ou 20 caractérisé en ce que les voies de guidage (91) pour les volets sustentateurs (92, 93) sont disposées latéralement sur une poutrelle (94) rapportée sur le pylône (3) et située sensiblement dans le prolongement de la poutre avant (7) de ce pylône.

**22.** Avion conforme à l'une des revendications 19 à 21 caractérisé en ce que les voies de guidage (91) des volets sustentateurs (92, 93) sont portées par une poutrelle (94) qui enfourche la partie inférieure de la poutre arrière (8) du pylône (3).

**23.** Avion conforme à l'une des revendications 19 à 22 caractérisé en ce que la poutrelle (94) pour les volets sustentateurs (92, 93) est fixée à l'avant à la base du caisson (2) de l'aile (1) et à l'arrière dans la région (J) où elle s'écarte de la poutre arrière (8).

**24.** Avion conforme à l'une des revendications 1 à 23 caractérisé en ce qu'il comporte sur une même aile d'autres moteurs (103, 104, 105) que les moteurs en tandem montés (4, 5) sur un même pylône (3), ces autres moteurs pouvant être soit isolés (103), soit également associés (104, 105) en tandem sur un même pylône (3b).

**25.** Avion conforme à l'une des revendications 1 à 24 caractérisé en ce que le pylône 3A du genre composé comprend deux poutres distinctes (7a, 8a) formant un V, respectivement fixées aux parties antérieure (2a) et postérieure (2b) du caisson d'aile (2) et solidarisées à une même nervure (121) du caisson d'aile (2).

**Claims**

**1.** A plane including, on each wing (1) at least one motive power unit of two engines (4, 5) whose axes (XX and YY) are parallel to each other and substantially disposed one upright another perpendicularly with respect to the average plane of the wing, on either side of such wing, with both engines (4, 5) being longitudinally shifted with respect to each other, one (4) being shifted frontwards relatively to the leading edge (1a) of the wing, and the other one being shifted rearwards, characterised in that the distances, $(e_4, e_5)$ relatively to the torsional axis (F) of the wing, of the axes of the engines (4, 5), which are designed to be continuously operated, are such that the resultant of such engines thrust substantially runs along the above axis (F), at least at certain speeds, with the engines (4, 5) being attached to the same mounting pylon (3) including means allowing its attachment onto the wing (1), such mounting pylon being designed such that one of the engines (4, 5) is in the region of the wing (1) trailing edge (1b), such that the torsional couples applied to the wing and generated by the weight and thrust of each engine (4, 5), are permanently minimised.

**2.** A plane according to claim 1, characterised in that the axis (XX) of the engine (4) shifted frontwards is located below the wing (1) while the axis (YY) of the engine (5) shifted rearwards is located above such wing.

**3.** A plane according to claim 2, characterised in that the leading edge (4a) of the front lower engine (4) is located at a distance from the wing leading edge (1a) which is equal to about 60 % of the wing (1) chord.

**4.** A plane according to one of claims 2 or 3, characterised in that the rear upper engine (5) is disposed at a distance from the wing located beyond the turbulence area (b) at the top side and the trailing edge (1b) of such wing.

**5.** A plane according to one of claims 1 to 4, characterised in that the mounting pylon (3 or 3A), having a unitary or complex structure, includes two combined girders (7, 8) or (7a, 8a) which support the front engine (4) and the rear engine (5) respectively, with such two girders (7, 8) extending along different directions while admitting the plane of axes (XX and YY) of engines (4, 5) as the plane of symmetry.

**6.** A plane according to claim 5, characterised in that the girder (8 or 8a) supporting the rear engine (5) goes through the trailing edge (1b) of the wing (1).

**7.** A plane according to one of claims 1 to 6, characterised in that the motive power unit comprises the same mounting pylon (3), having a unitary or complex structure, for fixing said two engines (4, 5), such mounting pylon including a V-shaped framework of girders attached to the wing (1) casing (2), such framework of girders being made up of a girder (7) substantially parallel to the wing (1) adjoining a mounting girder (8) disposed crosswise and obliquely with respect to such wing (1).

**8.** A plane according to one of claims 5 to 7, characterised in that the front girder (7) of the mounting pylon (3) is suspended under the wing (1) by means of fasteners (31, 32, 33) and (36, 37, 38) connected to the front face (30) and to the rear face (23) of the wing casing (2), respectively, and further including a pin (35) which enters a hole (34) in the upper face of said girder (7).

**9.** A plane according to one of claims 5 to 8 characterised in that the mounting pylon (3) includes two V-shaped girders (7, 8), attached together and both being attached to the wing casing (2), the connection between the two girders (7, 8) being substantially straight above the rear face (23) of the wing casing.

**10.** A plane according to claim 9 characterised in that the upper part (at D) of the rear girder (8) of the mounting pylon (3) is attached to the rear upper part of the wing casing (2) and its lower part (at E) is attached to the rear lower part of the front girder (7).

**11.** A plane according to one of claims 1 to 10, characterised in that the mounting pylon (3) is composed of an assembly of two girders (7, 8), with the girder (8) supporting the rear engine (5) and having a height equal to that of the front girder (7) increased by the height of the wing (1) casing (2), at the junction with the front girder (7).

**12.** A plane according to one of claims 1 to 11, characterised in that each engine (4, 5) is attached to the mounting pylon at two places, the attaching means being similar for the front engine (4) and the rear engine (5).

**13.** A plane according to one of claims 1 to 12, characterised in that the mounting pylon (3) supporting the two engines (4, 5) includes a streamlined filleting (6), with the part supporting the upper engine (5) being tapered rearwards (at 6c), such that it makes up a panel regulating the flow of air on the wing.

**14.** A plane according to one of claims 1 to 13, characterised in that the distance ($d_4$, $d_5$) between the centres of gravity (K4, K5) of the engines (4, 5) of the torsional axis (F) of the wing projecting on the latter's plane is such that the torques resulting from the weight of the engines are substantially balanced with respect to the wing torsional axis.

**15.** A plane according to one of claims 1 to 14, characterised in that the mounting pylon (3, 3A) is made up of two V-shaped girders (7, 8) or (7a, 8a) the angle of which is determined such that the resultant of the thrusts substantially runs along the wing torsional axis (F) and the torques resulting from the weight of the engines are substantially balanced with respect to said axis.

**16.** A plane according to one of claims 1 to 15, characterised in that the mounting pylon (3 or 3A) includes four points of attachment for each engine (4, 5), i.e. three points of attachment at the front (7, 8) and one point of attachment at the rear (72, 82), with the front points of attachment being substantially disposed upright to the center of gravity (K4, K5) of each engine (4, 5).

**17.** A plane according to claim 16, characterised in that the means attaching the engines to the mounting pylon are the same for the front engine (4) and the rear engine (5).

**18.** A plane according to one of claims 1 to 17, characterised in that the mounting pylon (3) includes a thermal shield interposed between such mounting pylon and at least one of the engines attached to it.

**19.** A plane according to one of claims 1 to 18, characterised in that the mounting pylon (3) laterally supports guiding tracks (91) provided for lift flaps (92, 93).

**20.** A plane according to claim 19, characterised in that the guiding tracks (91) extend rearwards beyond the girder (8) of the mounting pylon (3) supporting the rear upper engine (5).

**21.** A plane according to one of claims 19 or 20, characterised in that the guiding tracks (91) for the lift flaps (92, 93) are laterally disposed on a light beam (94) added onto the mounting pylon (3) and substantially located in continuation of the front girder (7) of such mounting pylon.

**22.** A plane according to one of claims 19 to 21, characterised in that the guiding tracks (91) of the lift flaps (92, 93) are supported by a light beam (94) which is mounted on the lower part of the rear girder (8) of the mounting pylon (3).

**23.** A plane according to one of claims 19 to 22, characterised in that the light beam (94) provided for the lift flaps (92, 93) is attached, at the front, to the base of the wing (1) casing (2) and at the rear, to the region (J) where it diverges from the rear girder (8).

**24.** A plane according to one of claims 1 to 23, characterised in that it includes, on the same wing, other engines (103, 104, 105) than the pair of engines (4, 5) mounted on the same mounting pylon (3), with such other engines being mounted either separately (103), or being combined (104, 105) in a pair, on the same mounting pylon (3).

**25.** A plane according to one of claims 1 to 24, characterised in that the mounting pylon (3A) of the complex type comprises two V-shaped separate girders (7a, 8a) attached to the front (2a) and rear (2b) parts of the wing casing (2), respectively, and made integral with the same rib (121) of the wing casing (2).

**Patentansprüche**

**1.** Flugzeug mit auf jedem Tragflügel (1) mindestens einem Flugtriebwerk mit zwei Motoren (4, 5), deren Achsen (XX und YY) parallel verlaufen und in Bezug auf die mittlere Ebene des Tragflügels beiderseits dieses Tragflügels etwa lotrecht zueinander angeordet sind, wobei die beiden Motoren (4, 5) in Längsrichtung gegeneinander versetzt sind, der eine (4) in Bezug auf die Vorderkante (1a) des Tragflügels (1) nach vorn, der andere nach hinten, dadurch gekennzeichnet, daß die Abstände (e4, e5) zwischen den Achsen der Motoren (4, 5), die für Dauerbetrieb ausgelegt sind, in Bezug auf die Torsionsachse (F) des Tragflügels so gewählt sind, daß die Resultierende der Schübe dieser Motoren zumindest bei bestimmten Leistungsbereichen etwa durch die vorgenannte Achse (F) läuft, wobei die Motoren (4, 5) an einem gleichen Pylon (3) befestigt sind, der Mittel zu seiner Befestigung auf dem Tragflügel (1) aufweist, wobei dieser Pylon so gestaltet ist, daß einer der Motoren (4, 5) im Bereich der Hinterkante (1b) des Tragflügels (1) liegt, so daß die auf den Tragflügel ausgeübten und durch das Gewicht und den Schub jedes Motors (4, 5) erzeugten Torsionsmomente ständig minimisiert werden.

2. Flugzeug nach Anspruch 1, dadurch gekennzeichnet, daß die Achse (XX) des nach vorn versetzten Motors (4) unterhalb des Tragflügels (1) angeordnet ist, während die Achse (YY) des nach hinten versetzten Motors (5) oberhalb desselben angordnet ist.

3. Flugzeug nach Anspruch 2, dadurch gekennzeichnet, daß die Vorderkante (4a) des unten liegenden vorderen Motors (4) zu der Vorderkante (1a) des Tragflügels in einem Abstand angeordnet ist, der etwa 60 % der Tiefe des Tragflügels (1) entspricht.

4. Flugzeug nach einem der Ansprüche 2 oder 3, dadurch gekennzeichnet, daß der oben liegende hintere Motor (5) zu dem Tragflügel in einem über die Wirbelzone (b) am Holm und die Hinterkante (1b) dieses Tragflügels hinausgehenden Abstand angeordnet ist.

5. Flugzeug nach einem der Ansprüche 1 bis 4, dadurch gekennzeichnet, daß der Pylon (3 bzw. 3A) einheitlicher oder zusammengesetzter Struktur zwei miteinander verbundene Träger (7, 8) bzw. (7a, 8a) aufweist, die jeweils den vorderen Motor (4) und den hinteren Motor (5) tragen, wobei sich diese beiden Träger (7, 8) in unterschiedliche Richtungen erstrecken und dabei die Ebene der Achsen (XX und YY) der Motoren (4, 5) als Symetrieebene zulassen.

6. Flugzeug nach Anspruch 5, dadurch gekennzeichnet, daß der Träger (8 bzw. 8a), der den hinteren Motor (5) trägt, die Hinterkante (1b) des Tragflügels (1) durchdringt.

7. Flugzeug nach einem der Ansprüche 1 bis 6, dadurch gekennzeichnet, daß das Flugtriebwerk einen gleichen Pylon (3) einheitlicher oder zusammengesetzter Struktur zur Befestigung der beiden Motoren (4, 5) aufweist, wobei dieser Pylon ein V-förmiges, am Gehäuse (2) des Tragflügels (1) befestigtes Trägerwerk aufweist, wobei dieses Trägerwerk aus einem etwa parallel zum Tragflügel (1) verlaufenden Träger (7) besteht, an den sich ein aufsteigender Träger (8) anschließt, der quer und schräg zu diesem Tragflügel (1) angeordnet ist.

8. Flugzeug nach einem der Ansprüche 5 bis 7, dadurch gekennzeichnet, daß der vordere Träger (7) des Pylons (3) unterhalb des Tragflügels (1) mittels Halterungen (31, 32, 33) und (36, 37, 38) aufgehängt ist, die jeweils mit der Vorderseite (30) des Gehäuses (2) des Tragflügels und seiner Hinterseite (23) verbunden sind, wobei das Gehäuse (2) zusätzlich einen Stift (35) aufweist, der in eine Öffnung (34) an der Oberseite des Trägers (7) eindringt.

9. Flugzeug nach einem der Ansprüche 5 bis 8, dadurch gekennzeichnet, daß der Pylon (3) zwei V-förmige Träger (7, 8) aufweist, die aneinander sowie beide am Gehäuse (2) des Tragflügels befestigt sind, wobei die Verbindung zwischen den beiden Trägern (7, 8) etwa lotrecht zur Hinterseite (23) des Tragflügelgehäuses angeordnet ist.

10. Flugzeug nach Anspruch 9, dadurch gekennzeichnet, daß der hintere Träger (8) des Pylons (3) im oberen Bereich (in D) am hinteren Oberteil des Tragflügelgehäuses (2) und im unteren Bereich (in E) am hinteren Unterteil des vorderen Trägers (7) befestigt ist.

11. Flugzeug nach einem der Ansprüche 1 bis 10, dadurch gekennzeichnet, daß der Pylon (3) aus einer Verbindung zweier Träger (7, 8) besteht, wobei der Träger (8), der den hinteren Motor (5) trägt, an seiner Verbindungsstelle mit dem vorderen Träger (7) eine Höhe aufweist, die der Höhe dieses vorderen Trägers (7) entspricht, zuzüglich der Höhe des Gehäuses (2) des Tragflügels (1).

12. Flugzeug nach einem der Ansprüche 1 bis 11, dadurch gekennzeichnet, daß jeder Motor (4, 5) an zwei Stellen auf dem Pylon befestigt ist, wobei die Befestigungsmittel für den vorderen Motor (4) und den hinteren Motor (5) die gleichen sind.

13. Flugzeug nach einem der Ansprüche 1 bis 12, dadurch gekennzeichnet, daß der Pylon (3), der die beiden Motoren (4, 5) trägt, in dem Bereich, in dem der vordere Motor (5) abgestützt wird, eine profilierte Ausrundung (6) aufweist, die sich nach hinten hin verengt (in 6c), so daß eine Platte zur Regulierung der Luftströmung auf dem Tragflügel gebildet wird.

14. Flugzeug nach einem der Ansprüche 1 bis 13, dadurch gekennzeichnet, daß der Abstand (d4, d5) zwischen den Schwerpunkten (K4, K5) der Motoren (4, 5) und der Torsionsachse (F) des Tragflügels, die über dessen Ebene ragt, so bemessen ist, daß die durch das Motorengewicht bedingten Kräftemomente in Bezug auf die Torsionsachse des Tragflügels deutlich ausgeglichen werden.

**15.** Flugzeug nach einem der Ansprüche 1 bis 14, dadurch gekennzeichnet, daß der Pylon (3, 3A) aus zwei V-förmigen Trägern (7, 8) bzw. (7a, 8a) besteht, deren Winkel so berechnet ist, daß die Resultierende der Schübe etwa durch die Torsionsachse (F) des Tragflügels läuft und daß die durch das Motorengewicht bedingten Kräftemomente in Bezug auf diese Achse ausgeglichen werden.

**16.** Flugzeug nach einem der Ansprüche 1 bis 15, dadurch gekennzeichnet, daß der Pylon (3 bzw. 3A) für jeden Motor (4, 5) vier Befestigungspunkte aufweist, nämlich drei vordere Befestigungspunkte (7, 8) und einen hinteren Befestigungspunkt (72, 82), wobei die vorderen Befestigungspunkte etwa lotrecht zum Schwerpunkt (K4, K5) jedes Motors (4, 5) angeordnet sind.

**17.** Flugzeug nach Anspruch 16, dadurch gekennzeichnet, daß die Befestigungsmittel der Motoren am Pylon für den vorderen Motor (4) sowie für den hinteren Motor (5) die gleichen sind.

**18.** Flugzeug nach einem der Ansprüche 1 bis 17, dadurch gekennzeichnet, daß der Pylon (3) einen Wärmeschild aufweist, der zwischen diesem Pylon und mindestens einem der an ihm befestigten Motoren eingefügt ist.

**19.** Flugzeug nach einem der Ansprüche 1 bis 18, dadurch gekennzeichnet, daß der Pylon (3) seitlich Führungsschienen (91) für Auftriebsklappen (92, 93) aufweist.

**20.** Flugzeug nach Anspruch 19, dadurch gekennzeichnet, daß sich die Führungsschienen (91) nach hinten erstrecken, über den Träger (8) des Pylons (3) hinaus, der den oben liegenden hinteren Motor (5) trägt.

**21.** Flugzeug nach einem der Ansprüche 19 oder 20, dadurch gekennzeichnet, daß die Führungsschienen (91) für die Auftriebsklappen (92, 93) seitlich auf einem Trägerelement (94) angeordnet sind, das an dein Pylon (3) befestigt ist und etwa in der Verlängerung des vorderen Trägers (7) dieses Pylons liegt.

**22.** Flugzeug nach einem der Ansprüche 19 bis 21, dadurch gekennzeichnet, daß die Führungsschienen (91) der Auftriebsklappen (92, 93) von einem Trägerelement (94) getragen werden, das in den unteren Teil des hinteren Trägers (8) des Pylons (3) eindringt.

**23.** Flugzeug nach einem der Ansprüche 19 bis 22, dadurch gekennzeichnet, daß das Trägerelement (94) für die Auftriebsklappen (92, 93) vorn an der Basis des Gehäuses (2) des Tragflügels (1) befestigt ist und hinten in dem Bereich (J), wo es von dein hinteren Träger (8) beabstandet ist.

**24.** Flugzeug nach einem der Ansprüche 1 bis 23, dadurch gekennzeichnet, daß es auf einem gleichen Tragflügel weitere Motoren (103, 104, 105) als das auf einem gleichen Pylon (3) montierte Motorenpaar (4, 5) aufweist, wobei diese weiteren Motoren entweder einzeln oder ebenfalls paarweise (104, 105) auf einem gleichen Pylon (3b) angebracht sind.

**25.** Flugzeug nach einem der Ansprüche 1 bis 14, dadurch gekennzeichnet, daß der Pylon (3A) zusammengesetzter Art zwei verschiedene, ein V bildende Träger (7a, 8a) aufweist, die am vorderen (2a) bzw. hinteren Teil (2b) des Flügelgehäuses (2) befestigt und einstückig an einer gleichen Rippe (121) des Flügelgehäuses (2) angeformt sind.

FIG.1

FIG.2

FIG.3

FIG.4

FIG.5

FIG.6

FIG.6a

FIG.6b

FIG.6c

FIG_7

FIG.8

FIG. 9

FIG. 10

FIG. 12

FIG_11

FIG_19

FIG_13

EP 0 619 793 B1

FIG.14

FIG.15

FIG.16

FIG.17

FIG.18

FIG.20